# FASCICULE DE BREVET EUROPEEN

(11) **EP 0 698 516 B1**
(45) Date de publication et mention de la délivrance du brevet: **22.04.1998**
(21) Numéro de dépôt: 95401958.4
(22) Date de dépôt: 25.08.1995
(51) Int. Cl.: B60J 10/00

(54) **Perfectionnements aux profilés en élastomère pour véhicules automobiles**
Verbesserungen an elastomerischen Formteilen für Kraftfahrzeuge
Enhanced elastomeric profiles for motorvehicles

(30) Priorité: 26.08.1994 FR 9410330
(43) Date de publication de la demande: 28.02.1996
(73) Titulaire: BTR SEALING SYSTEMS FRANCE, 92000 Nanterre (FR)
(72) Inventeur: Timmerman, Patrick, F-27380 Vandrimare (FR)
(74) Mandataire: Jolly, Jean-Pierre

(56) Documents cités:
- EP-A- 0 395 444
- GB-A- 2 240 356

## Description

L'invention concerne les profilés en élastomère pour véhicules automobiles. Elle concerne plus particulièrement de tels profilés dépourvus de moyens de fixation sur la carrosserie du véhicule.

Des profilés de ce type, par exemple en caoutchouc, sont utilisés comme joints d'étanchéité en divers emplacements des véhicules. On les utilise, par exemple, comme joints anti-salissures disposés en bas de la caisse du véhicule, comme joints d'étanchéité au niveau du pied arrière, ou encore comme joints de double étanchéité.

Ces joints n'étant pas fixés sur une feuillure ou sur un rebord saillant de la carrosserie, ils ont tendance à se déformer, notamment au niveau de leurs extrémités libres, du fait de leur manque de rigidité et de leur élasticité, ce qui nuit à leur efficacité fonctionnelle et à leur aspect.

La présente invention vise à remédier à cet inconvénient des joints de ce type, en les renforçant, au niveau de leurs extrémités libres, à l'aide d'une pièce rigide apportée.

On connaît par GB-A-2 240 356 un profilé en élastomère pour véhicule automobile, présentant deux extrémités libres et dépourvues de moyen de fixation sur la carrosserie du véhicule, ce profilé comportant, rapporté sur au moins l'une de ses parties d'extrémité, un élément de renfort rigide, qui comprend une semelle en un matériau thermoplastique, appliquée contre ladite partie d'extrémité et rigidement solidaire de celle-ci.

La présente invention a pour objet un profilé de ce type général, caractérisé en ce que ladite partie d'extrémité comprend une lèvre attenante, dont est rigidement solidaire et contre laquelle est appliquée la semelle de l'élément de renfort.

Cette semelle pourra être collée contre la lèvre solidaire de la partie d'extrémité associée du profilé.

Elle pourra aussi être moulée par injection de la matière thermoplastique au contact de la lèvre solidaire de la partie d'extrémité associée du profilé.

Elle pourra enfin comporter des picots clipsés dans des ouvertures ménagées dans la lèvre solidaire de la partie d'extrémité associée du profilé.

Pour certains types de joints, notamment les joints d'étanchéité du pied arrière, cette dernière forme de réalisation constitue une forme préférée de mise en oeuvre de l'invention. En effet, dans ce cas, des parties en saillie pourront être prévues sur une lèvre associée à la partie d'extrémité dont est solidaire la semelle en un matériau thermoplastique et ces parties pourront être engagées dans des lumières de cette lèvre pour faire saillie à l'extérieur de celles-ci, en direction de la porte, en formant ainsi des butées déformables. Ces butées permettront d'éviter des bruits parasites, lors du claquement de la porte, à la fermeture de celle-ci, et amortir le choc résultant de cette fermeture. On notera que les parties en saille formant butées pourront être simplement constituées par des carottes provenant de l'opération de moulage par injection de la lèvre rapportée sur l'extrémité du profilé. Au lieu d'être éliminées ensuite par découpe, ces carottes constitueront alors avantageusement les parties en saillie servant de butées. Naturellement, les parties en saillie peuvent être distinctes des carottes de moulage de la lèvre et constituer des parties intégrantes de celle-ci.

Une telle forme de mise en oeuvre de l'invention va être décrite ci-après plus en détail, en référence aux dessins annexés, qui n'ont pas de caractère limitatif. Sur ces dessins :

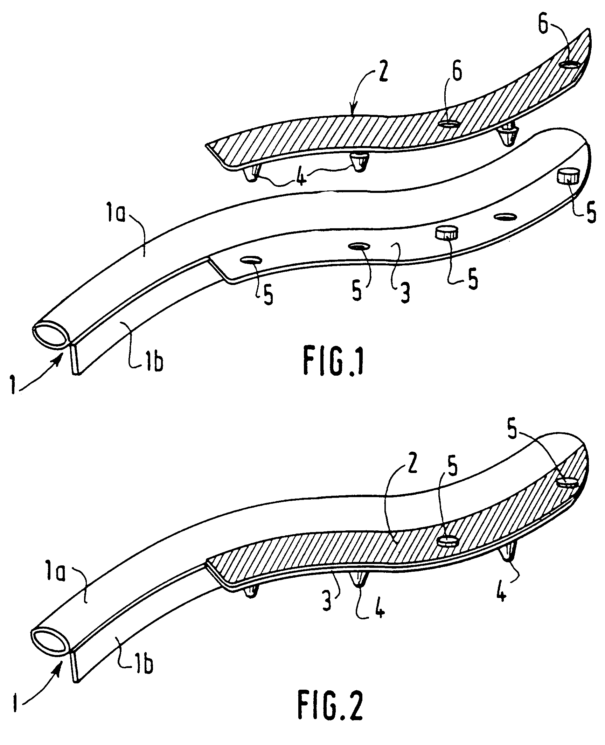

La figure 1 est une vue en perspective éclatée d'une partie d'extrémité d'un profilé en élastomère, servant de `joint d'étanchéité au niveau du pied arrière d'un véhicule, et de la semelle en matériau thermoplastique associée ;

La figure 2 est une vue analogue représentant le joint et la semelle assemblés.

Le joint 1 de caoutchouc, dont la partie d'extrémité est représentée sur les dessins, est un joint d'étanchéité du pilier dit pied arrière d'un encadrement de porte et il comprend une partie tubulaire 1a destinée à être comprimée par la porte et une lèvre d'enjolivement 1b attenante à la partie tubulaire 1a.

Ce joint n'étant pas fixé rigidement sur une feuillure de la carrosserie et étant en un matériau déformable élastiquement, ses extrémités libres ont tendance à se déformer et à présenter par conséquent un aspect peu agréable au regard.

Pour remédier à cet inconvénient, conformément à l'invention, une semelle rigide 2 en un matériau thermoplastique est appliquée contre une lèvre 3 attenante à la partie d'extrémité du joint et est rendue rigidement solidaire de celle-ci, en vue de la maintenir en forme.

Dans le cas de la forme de réalisation représentée sur le dessin, des parties formant picots 4 font saillie à l'extérieur de la face de la semelle 2 tournée vers la lèvre 3 et sont clipsées dans des orifices 5 de celle-ci. Naturellement, comme indiqué ci-dessus, d'autres moyens de solidarisation de la semelle 2 et de la lèvre 3 peuvent être utilisés sans sortir du cadre de l'invention.

Deux parties en saillie 5 sont également prévues sur la face de la lèvre 3 tournée vers la semelle 2 et engagées dans des lumières 6 de celle-ci, à l'extérieur desquelles elles dépassent, pour former des butées déformables destinées à amortir le choc de la porte, lors de la fermeture de celle-ci, et le bruit résultant.

Comme indiqué ci-dessus, les parties 5 peuvent avantageusement être constituées des carottes provenant du moulage de la lèvre 5 sur le profilé 1.

L'invention apporte donc un moyen simple et facile à mettre en oeuvre pour rigidifier les extrémités de joints en un matériau déformable et pour les maintenir en forme.

## Revendications

1. Profilé (1) en élastomère pour véhicule automobile, présentant deux extrémités libres et dépourvues de moyen de fixation sur la carrosserie du véhicule, du type comportant, rapporté sur au moins l'une de ses parties d'extrémité, un élément (2) de renfort rigide comprenant une semelle en un matériau thermoplastique, caractérisé en ce que ladite partie d'extrémité comprend une lèvre (3) attenante, dont est rigidement solidaire et contre laquelle est appliquée la semelle de l'élément de renfort.

2. Profilé selon la revendication 1, caractérisé en ce que ladite semelle (2) est collée contre la lèvre (3) attenante à la partie d'extrémité associée du profilé.

3. Profilé selon la revendication 1, caractérisé en ce que ladite semelle (2) est moulée par injection au contact de la lèvre (3) attenante à la partie d'extrémité associée du profilé.

4. Profilé selon la revendication 1, caractérisé en ce que ladite semelle (2) comporte des picots (4) clipsés dans des ouvertures (5) ménagées dans la lèvre (3) attenante à la partie d'extrémité associée du profilé.

5. Profilé selon la revendication 4, caractérisé en ce que des parties (5), faisant saillie à la surface de la lèvre (3) attenante à la partie d'extrémité du profilé, sont engagées dans des lumières (6) de ladite semelle (2) et dépassent à l'extérieur de celle-ci pour former des butées déformables.

## Claims

1. A shaped member (1) of elastomer for a motor vehicle, having two free ends which are without means for fixing to the body of the vehicle, of the type comprising, attached to at least one of its end parts a rigid reinforcing element (2) comprising a base plate portion of a thermoplastic material, characterised in that said end part comprises an adjoining lip (3) with respect to which the base plate portion of the reinforcing element is rigidly fixed and against which said base plate portion of the reinforcing element is applied.

2. A shaped member according to claim 1 characterised in that said base plate portion (2) is glued against the lip (3) adjoining the associated end part of the shaped member.

3. A shaped member according to claim 1 characterised in that said base plate portion (2) is moulded by injection in contact with the lip (3) adjoining the associated end part of the shaped member.

4. A shaped member according to claim 1 characterised in that said base plate portion (2) comprises barb-like studs (4) clipped into openings (5) provided in the lip (3) adjoining the associated end part of the shaped member.

5. A shaped member according to claim 4 characterised in that portions (5) projecting at the surface of the lip (3) adjoining the end part of the shaped member are engaged into openings (6) of said base plate portion (2) and project to the exterior of the base plate portion to form deformable stops.

## Patentansprüche

1. Profilelement (1) aus Elastomer für ein Kraftfahrzeug, das zwei Enden aufweist, die frei sind und keine Befestigungsvorrichtung auf der Fahrzeugkarosserie aufweisen, der Art, die auf mindestens einen seiner Endabschnitte aufgesetzt ein Element (2) mit einer steifen Abstützung aufweist, das eine Lamelle aus einem thermoplastischen Material aufweist, dadurch **gekennzeichnet,** daß der Endabschnitt eine angrenzende Lippe (3) aufweist, mit der er fest verbunden ist und gegen die die Lamelle des Abstützelements aufgebracht ist.

2. Profilelement nach Anspruch 1, dadurch gekennzeichnet, daß die Lamelle (2) gegen die Lippe (3) geklebt ist, die an den mit dem Profilelement verbundenen Endabschnitt angrenzt.

3. Profilelement nach Anspruch 1, dadurch gekennzeichnet, daß die Lamelle (2) durch Einspritzen in Kontakt mit der Lippe (3) ausgebildet ist, die an den mit dem Profilelement verbundenen Endabschnitt angrenzt.

4. Profilelement nach Anspruch 1, dadurch gekennzeichnet, daß die Lamelle (2) Keile (4) aufweist, die in Öffnungen (5) geklipst sind, die in der Lippe (3) ausgespart sind, die an den mit dem Profilelement verbundenen Endabschnitt angrenzt.

5. Profilelement nach Anspruch 4, dadurch gekennzeichnet, daß Abschnitte (5), die von der Oberfläche der Lippe (3) vorspringen, die an den mit dem Profilelement verbundenen Endabschnitt angrenzt, in Öffnungen (6) der Lamelle (2) gesteckt sind und an der Außenseite dieser vorragen, um verformbare Anschläge zu bilden.
